(19)

Europäisches
Patentamt
European
Patent Office
Office européen
des brevets

(11) **EP 3 154 374 B1**

(12) **EUROPEAN PATENT SPECIFICATION**

(45) Date of publication and mention
of the grant of the patent:
**09.05.2018  Bulletin 2018/19**

(51) Int Cl.:
*A23L 5/20* (2016.01)    *C11B 1/10* (2006.01)
*C11B 3/00* (2006.01)

(21) Application number: **15744982.8**

(22) Date of filing: **15.05.2015**

(86) International application number:
**PCT/MY2015/000039**

(87) International publication number:
**WO 2015/174821 (19.11.2015 Gazette 2015/46)**

(54) **PROCESS OF REFINING A CRUDE PALM FRUIT OIL PRODUCT**

VERFAHREN ZUM VEREDELN EINES ROHEN PALMFRUCHTÖLPRODUKTS

PROCÉDÉ DE RAFFINAGE D'UN PRODUIT D'HUILE DE FRUIT DE PALMIER BRUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.05.2014  PCT/MY2014/000109**

(43) Date of publication of application:
**19.04.2017  Bulletin 2017/16**

(73) Proprietor: **Sime Darby Malaysia Berhad
Kuala Lumpur 50350 (MY)**

(72) Inventors:
- **PIJPERS, Ralf
  3336 Le Zwijndrecht (NL)**
- **LONGARELA, Gema Rodriguez
  3336 Le Zwijndrecht (NL)**
- **DE RUITER, Gerhard Adriaan
  3336 Le Zwijndrecht (NL)**
- **TIONG, Soon Huat
  43400 Serdang (MY)**
- **TEH, Huey Fang
  43400 Serdang (MY)**
- **MD ZAIN, Mohd Zairey Bin
  43400 Serdang (MY)**
- **NOOR, Ahmadilfitri
  42960 Darul Ehsan (MY)**
- **KRISHNAN, Ananthan
  42960 Selangor (MY)**
- **BERG, Hijlkeline Eppone
  3336 Le Zwijndrecht (NL)**
- **APPLETON, David Ross
  43400 Serdang (MY)**

- **KULAVEERASINGAM, Harikrishna AL
  43400 Serdang (MY)**

(74) Representative: **Nederlandsch Octrooibureau
P.O. Box 29720
2502 LS The Hague (NL)**

(56) References cited:
EP-A1- 2 586 854    WO-A1-2010/126136
US-A- 5 336 794    US-A1- 2013 302 881

- **MUSFIRAH ZULKURNAIN ET AL: "The effects of
  physical refining on the formation of
  3-monochloropropane-1,2-diol esters in relation
  to palm oil minor components", FOOD
  CHEMISTRY, ELSEVIER LTD, NL, vol. 135, no. 2,
  30 April 2012 (2012-04-30), pages 799-805,
  XP028427206, ISSN: 0308-8146, DOI:
  10.1016/J.FOODCHEM.2012.04.144 [retrieved on
  2012-05-11] cited in the application**
- **M. ROSSI ET AL: "The role of bleaching clays and
  synthetic silica in palm oil physical refining",
  FOOD CHEMISTRY, vol. 82, no. 2, 1 August 2003
  (2003-08-01) , pages 291-296, XP055162978,
  ISSN: 0308-8146, DOI:
  10.1016/S0308-8146(02)00551-4 cited in the
  application**
- **WAI-LIN SIEW ET AL: "SILICA REFINING OF
  PALM OIL", JOURNAL OF THE AMERICAN OIL
  CHEMISTS' SOCIETY. (JAOCS), SPRINGER, DE,
  vol. 71, no. 9, 1 September 1994 (1994-09-01),
  pages 1013-1016, XP000469679, ISSN:
  0003-021X, DOI: 10.1007/BF02542271 cited in the
  application**

**(Cont. next page)**

Remarks:

The file contains technical information submitted after the application was filed and not included in this specification

Remarks:

The file contains technical information submitted after the application was filed and not included in this specification

**Description**

**TECHNICAL FIELD OF THE INVENTION**

The present invention relates to a process of refining a crude palm fruit oil product, such as crude palm fruit oil (e.g. crude palm oil or crude palm kernel oil) or a fraction of such a crude palm fruit oil. The refining process according to the present invention employs a combination of porous silica material and bleaching earth, the porous silica material being selected from silica (silica hydrogel), amorphous silicate, zeolite and combinations thereof. The inventors have unexpectedly found that this process enables the production of refined palm fruit oil products with strongly reduced levels of 3-MCPD fatty acid esters.

**BACKGROUND OF THE INVENTION**

Free 3-monochloropropane-1,2-diol (3-MCPD) has been identified as a contaminant in various foods like liquid seasoning (e.g. soy sauce) and bakery products that have been heated to high temperatures. This substance is formed when fat- and chloride salt-containing foods are processed at high temperatures. In animal experiments 3-MCPD has led to an increase in the cell count (hyperplasia) in renal tubules and, at higher levels, it triggered benign tumours.

Studies have identified 3-MCPD fatty acid esters in refined oils, such as refined palm oil. 3-MCPD fatty acid esters are believed to be formed at high temperatures in the presence of water following a reaction between fats and chloride ions. In the refining of palm fruit oil and fractions of palm fruit oils 3-MCPD fatty acid esters are predominantly formed during deodorisation. Besides 3-MCPD fatty acid esters also 2-MCPD fatty acid esters and glycidyl fatty acid esters have been identified in these refined palm fruit oils.

Crude palm fruit oil is refined to remove impurities such as undesirable odour, flavour and colour. Palm fruit oil refining can be operated according to two main routes: chemical refining or physical refining. The principal difference between the two routes is how the free fatty acids (FFA) are removed. In physical refining, most FFA are removed in the deodorizing unit after bleaching. In chemical refining, the oil is cleared from most of the FFA by means of alkali neutralisation prior to bleaching.

Processing techniques that minimise formation of the 3-MCPD fatty acid esters during the refining of crude palm fruit oil products have been suggested in the prior art.

WO 2010/063450 describes a method for reducing the 3-MCPD content of refined vegetable oil by using a refining method wherein a crude oil is degummed, the degummed oil is admixed with a bleaching earth and bleached, the bleaching earth is separated off from the bleached oil, and so a filter oil is obtained and the filter oil is deodorised, characterised in that water is added to the crude oil for the degumming, and the degumming is carried out without addition of acid at a temperature of below 70°C, the degummed oil is heated to a temperature in the range from 80 to 100°C and the bleaching earth is added to the heated degummed oil in an amount of greater than 1.5% by weight, and the bleaching is carried out at a temperature in the range from 80 to 100°C.

WO 2011/069028 describes a method of removing glycidyl esters from oil, the method comprising: contacting the oil with an adsorbent; and, subsequently steam refining the oil. Examples of adsorbents mentioned include magnesium silicate, silica gel, and bleaching clay. Example 1 E of WO 2011/069028 describes an experiment in which deodorised palm oil was contacted with adsorbents and redeodorised. Deodorised palm oil was incubated with the adsorbents at 70°C for 30 min under 125 mm Hg vacuum. Adsorbents included magnesium silicate (Magnesol R60™, Dallas Group, Whitehouse, NJ), silica gel (Fisher Scientific No. S736-1), acidic alumina (Fisher Scientific No. A948- 500), and acid washed activated carbon (ADP(TM) carbon, Calgon Corp., Pittsburg, PA).

WO 2012/107230 describes a process for the production of a refined oil having a reduced 3-MCPD ester and/or glycidyl ester content comprising subjecting an oil to:

    a) a bleaching step,
    b) a deodorisation step,
    c) a final bleaching step, and
    d) a final deodorisation step,

wherein final deodorisation step (d) is carried out at a temperature at least 40°C lower than deodorisation step (b).

WO 2013/093093 describes a method of removing glycidyl esters from a vegetable oil comprising contacting the oil with at least 0.5 % by weight of the oil of an acid-activated bleaching earth and deodorising the oil at a temperature of less than 200°C for at least 30 minutes.

The use of silica in the refining of crude palm fruit oil products has been described in the prior art.

Trisyl® silica is a commercial silica product that is used in the refining of vegetable oils. Possible uses identified by the manufacturer are:

- Sequential Addition (2-Step addition): The addition of silica (to remove polar impurities) followed by bleaching clay (to remove color bodies).
- Packed Bed Bleaching: Silica treated oil (upstream) is filtered through filters pre-coated with clay.
- Tri-Clear Process: Silica is applied to remove the soaps and phospholipids present in the oil and to prevent the clogging of the "pre-filter" spent clay bed. Midstream, the already used and considered "spent" clay that is routinely discarded at the end of each filter cycle is still partially active and is used in an additional cycle in combination with silica, thereby reducing the impurity load on the fresh clay that is added downstream. Downstream, a reduced amount of fresh clay is added to the oil in order to achieve the required color specification and at the same time to prepare another "pre-filter" spent clay bed.

US 5,336,794 describes a process for the removal of impurities from glyceride oil comprising:

a) selecting a glyceride oil which comprises impurities selected from the group gums, soaps, and phospholipids, and which also comprises pigments,
b) contacting said oil with a sufficient amount of an amorphous silica adsorbent to reduce the levels of said impurities to levels which are noninhibitory to operation of the packed bed of step (c), and
c) passing said oil through a packed bed of a pigment removal agent, the quantity of said agent in said packed bed being at least about 50% of the total quantity of said agent used in the adsorption and treatment process.

Siew et al. (Silica Refining of Palm Oil, JAOCS, Vol. 71, no. 9 (September 1994)) investigated the use of silica (Trisyl) in combination with bleaching clay in palm oil refining. The optimum conditions required for Trisyl and bleaching clay were found to be 95-105°C for a period of 30-40 min. Improvements in colour performance for palm oil products were noted with the addition of small quantities of Trisyl (0.06-0.24%} to the bleaching clay. Lower phosphorus levels were obtained in the refined oils with an addition of 0.12 and 0.24% Trisyl, respectively. Better color stability was also obtained with oils treated with Trisyl. An additional advantage was the reduction in filtration time, leading to possible higher throughput in refining.

Rossi et al. (The role of bleaching clays and synthetic silica in palm oil physical refining, Food Chemistry 82 (2003) 291-296) describe palm oil physical refining processes in which different clay types and concentrations were used in combination with a fixed amount of synthetic silica. The analytical characteristics of crude, degummed, bleached and steam-refined oils were compared. The authors observe that although the tested clays had different activities, the analytical characteristics of the corresponding refined palm oil samples were similar. According to the authors this can be explained by the fact that synthetic silica, due to its synergic action with clays, smoothes the differences between the performances of the various clays.

Zulkurnain et al. (The effects of physical refining on the formation of 3-monochloropropane-1,2-diol esters in relation to palm oil minor components, Food Chemistry 135 (2012) 799-805) describe the outcome of a study in which D-optimal design was used to study the effects of the degumming and bleaching processes on the reduction in 3-MCPD ester formation in refined palm oil from poor-quality crude palm oil relative to the palm oil minor components that are likely to be their precursors. Water degumming remarkably reduced 3-MCPD ester formation by up to 84%, from 9.79 mg/kg to 1.55 mg/kg. Bleaching with synthetic magnesium silicate caused a further 10% reduction, to 0.487 mg/kg. The authors conclude that the reduction in 3-MCPD ester formation could be due to the removal of related precursors prior to the deodorisation step and that the phosphorus content of bleached palm oil showed a significant correlation with 3-MCPD ester formation.

Ermacora et al. (Influence of oil composition on the formation of fatty acid esters of 2-chloropropane-1,3-diol (2-MCPD) and 3-chloropropane-1,2-diol (3-MCPD) under conditions simulating oil refining; Food Chemistry 161 (2014) 383-389) investigated the effect of acylglycerols and chlorinated compounds on the formation yield of MCPD esters in model systems simulating oil deodorisation. The composition of the oils was modified by enzymatic hydrolysis, silica gel purification and application of various refining steps prior to deodorisation (namely degumming, neutralisation, bleaching). Availability of chloride ions was the main limiting factor in the formation reaction. Polar chlorinated compounds were found to be the main chloride donors, although the presence of reactive nonpolar chloride-donating species was also observed. WO 2010/126136 discloses a process of refining a crude palm fruit oil product, said process comprising the successive steps of removing phospholipids and/or free fatty acids from a crude palm fruit oil product by subjecting the oil product to an alkaline pretreatment, contacting the pretreated palm fruit oil product with one of bleaching earth or a porous silica material to produce a bleached palm fruit oil and deodorizing the bleached palm fruit oil product to produce a refined palm fruit oil product.

## SUMMARY OF THE INVENTION

The inventors have unexpectedly discovered that refined palm fruit oil products having an exceptionally low content of 3-MCPD fatty acid esters can be produced by a refining process comprising the successive steps of:

a) removing phospholipids and/or free fatty acids from a crude palm fruit oil product by subjecting the oil product to a pretreatment, thereby producing a pretreated palm fruit oil product with a reduced phospholipid content and/or a reduced free fatty acid content;
b) contacting the pretreated palm fruit oil product with bleaching earth and a porous silica material to produce a bleached palm fruit oil product, said porous silica material having a surface area of at least 10 m$^2$/g and being selected from the group consisting of silica, amorphous silicate, zeolite and combinations thereof; and
c) deodorizing the bleached palm fruit oil product to produce a refined palm fruit oil product; wherein the pretreated palm fruit oil product is contacted with the porous silica material at a temperature of at least 100 °C and wherein the pretreatment of the crude palm fruit oil product comprises the successive steps of:

- mixing the crude palm fruit oil product with an aqueous liquid having an alkaline pH of more than 8 to produce an oil-and-water mixture; and
- removing an aqueous liquid containing polar lipids from the oil-and-water mixture.

The pretreated palm fruit oil product may be contacted with the bleaching earth and the porous silica material simultaneously or sequentially.

The process of the present invention enables the production of refined palm oil and of refined palm oil fractions containing less than 1 mg/kg 3-MCPD fatty acid esters.

## DETAILED DESCRIPTION OF THE INVENTION

A first aspect of the present invention relates to process of refining a crude palm fruit oil product, said process comprising the successive steps of:

a) removing phospholipids and/or free fatty acids from a crude palm fruit oil product by subjecting the oil product to a pretreatment, thereby producing a pretreated palm fruit oil product with a reduced phospholipid content and/or a reduced free fatty acid content;
b) simultaneously or sequentially contacting the pretreated palm fruit oil product with bleaching earth and a porous silica material to produce a bleached palm fruit oil product, said porous silica material having a surface area of at least 10 m$^2$/g and being selected from the group consisting of silica (silica hydrogel), amorphous silicate, zeolite and combinations thereof; and
c) deodorizing the bleached palm fruit oil product to produce a refined palm fruit oil product; wherein the pretreated palm fruit oil product is contacted with the porous silica material at a temperature of at least 100 °C and wherein the pretreatment of the crude palm fruit oil product comprises the successive steps of:

- mixing the crude palm fruit oil product with an aqueous liquid having an alkaline pH of more than 8 to produce an oil-and-water mixture; and
- removing an aqueous liquid containing polar lipids from the oil-and-water mixture.

The term "palm fruit" as used herein refers to fruit from the oil palm. The mesocarp of palm fruit is the source of palm oil. The kernel of the palm fruit is the source of palm kernel oil. The term 'palm fruit oil product' as used herein, unless indicated otherwise, refers to oil that is derived from palm fruit. The term 'palm fruit oil product' also encompasses fractions of palm fruit oils. Examples of such palm fruit oil fractions include palm olein (IV=55-59), palm stearin (IV=32-37), palm super olein (IV≥60), palm super stearin (IV=11-16), palm mid fraction (IV=37-41), palm soft stearin (IV=42-48), palm kernel olein (IV=20-25) and palm kernel stearin (IV=5-8). The term 'palm fruit oil product' also encompasses blends of the aforementioned palm fruit oil products.

The terminology 'crude palm fruit oil product' as used herein refers to a palm fruit oil product that has not been subjected to bleaching or deodorisation. Thus, the term 'crude palm fruit oil product' encompasses both palm fruit oil products that have been degummed and palm fruit oil products that have not been degummed.

The term 'bleaching earth' as used herein refers to activated clay materials which, on account of their adsorption activity and/or bleaching activity, can be used for the purification of oils and fats. Examples of these clay materials include montmorilloinite clay, bentonite clay and attapulgite clay. These clay types are found individually and also in combination.

The term 'deodorisation' as used herein, unless indicated otherwise, refers to the removal of volatile components from bleached palm oil products by means of vacuum stripping. Typically, deodorisation is conducted under vacuum at a high temperature using a stripping medium such a steam.

The present invention offers the important advantage that it enables the production of a refined palm fruit oil product having low content of 3-MCPD fatty acid esters starting from a crude palm fruit oil product of standard quality, notably a crude palm fruit oil product having a free fatty acid content of at least 2.5%, especially at least 3%. Thus, unlike the processes described in WO 2011/002275 and WO 2012/130745 the present refining process does not require the use of a crude palm oil having a very low free fatty acid content. The free fatty acid content can be determined using the analytical procedure described in ISO 660.

In accordance with one embodiment of the present invention, the crude palm fruit oil product is a crude palm oil product. The crude palm oil product is preferably selected from crude palm oil, crude palm olein, crude palm stearin and blends thereof. Most preferably, the crude palm oil product is crude palm oil.

In accordance with another embodiment of the invention, the crude palm fruit oil product is a crude palm kernel oil product. Preferably, the crude palm kernel oil product is selected from crude palm kernel oil, crude palm kernel olein, crude palm kernel stearin and blends thereof.

It should be understood that the present process may include additional process steps besides the pretreatment step a), the bleaching step b) and the deodorization step c). For instance, the present process may include a fractionation step an/or an interesterification step before the deodorisation step c). Likewise, the present process may employ washing steps, e.g. before and/or after the bleaching step b).

The aqueous liquid that is employed in the pretreatment preferably has an alkaline pH of more than 10, more preferably of more than 11, and most preferably of more than 12.

In the pretreatment step the crude palm fruit oil product is typically mixed with the alkaline aqueous liquid in such a ratio that the resulting mixture contains an excess amount of base relative to the amount of free fatty acids in the same mixture. Typically, the water phase of the resulting mixture has a pH of more than 8, more preferably of more than 10 and most preferably of more than 11.

During the mixing of the crude palm fruit oil product with an aqueous liquid as part of pretreatment step a) polar lipids are extracted from the crude palm fruit oil product into the aqueous liquid. Examples of such polar lipids include free fatty acids, salt of free fatty acids (soaps) and phospholipids. The aqueous liquid containing these polar lipids is preferably removed from the oil-and-water mixture by means of centrifugation or gravity setting, most preferably by centrifugation.

After removal of the aqueous liquid containing polar lipids, the palm fruit oil product may suitably be dried to a water content of less than 0.15 wt.%, more preferably to a water content of less than 0.1 wt.% and most preferably of less than 0.08 wt.%.

In accordance with a particularly preferred embodiment of the invention the pretreatment of the crude palm fruit oil product comprises neutralizing the crude palm fruit oil product by subjecting said crude palm fruit oil product to the following sequence of process steps:

- degumming of the crude palm fruit oil product, e.g. by acid precipitation;
- adding a base to neutralise the degummed palm fruit oil product under formation of a soap stock;
- removing the soap stock to obtain a pretreated palm fruit oil product; and
- optionally drying of the pretreated palm fruit oil product, e.g. to a water content of less than 0.2 wt.%.

The soap stock may suitably be removed by techniques known in the art, such as centrifugation and/or gravity settling.

The base that is added to neutralise the crude palm fruit oil product is preferably selected from sodium hydroxide, calcium hydroxide, magnesium hydroxide, sodium silicate and combinations thereof.

The pretreated palm fruit oil product employed in the present process typically has a water content of less than 0.2 wt.%, more preferably of less than 0.1 wt.% and most preferably of less than 0.05 wt.%.

The free fatty acid content of the pretreated palm fruit oil product typically is less than 0.5 wt.%. More preferably, the free fatty acid content of the pretreated palm fruit oil product is less than 0.25 wt.%, most preferably less than 0.1 wt.%.

The phosphorus content of the pretreated palm fruit oil product preferably is less than 30 ppm. More preferably, the phosphorus content of the pretreated palm fruit oil product is less than 10 ppm, most preferably less than 5 ppm. The phosphorus content may be determined using the method described in ISO 10540-1.

The inventors have found that the present process can yield a refined palm fruit oil product with a particularly low level of 3-MCPD fatty acid esters if the pretreated palm fruit oil product is contacted with the porous silica material at a temperature of at least 100°C, preferably of at least 105°C, even more preferably of at least 108°C and most preferably of at least 110°C. Here these temperatures refer to the temperature of the pretreated palm fruit oil product when it is contacted with the porous silica material. Typically, the temperature of the palm fruit oil product during the contacting with the silica material does not exceed 200°C, more preferably it does not exceed 170°C, most preferably it does not exceed 150°C.

In the present process the pretreated palm fruit oil product is typically contacted with the porous silica material for at least 1 minute, more preferably for at least 3 minutes, even more preferably at least 6 minutes and most preferably at least 10 minutes. The contact time between the porous silica material and the pretreated palm fruit oil product usually does not exceed 300 minutes. Most preferably, said contact time does not exceed 180 minutes.

The pretreated palm fruit oil product is advantageously contacted with the porous silica material at reduced pressure. Preferably, the contacting of the pretreated palm fruit oil product occurs at a pressure of not more than 500 mbar, more preferably of not more than 200 mbar and most preferably of not more than 100 mbar.

The contacting of the pretreated palm fruit oil product with the porous silica material in accordance with the present invention preferably comprises combining of the silica material and the pretreated palm fruit oil product in an amount of 0.03-5% by weight of the pretreated palm fruit oil product. More preferably, the silica is combined with the pretreated palm fruit oil product in an amount of 0.06-3%, more preferably of 0.1-2% and most preferably of 0.15-1.5% by weight of the pretreated palm fruit oil product.

The porous silica material employed in accordance with the present invention preferably is a hydrous silica material, more particularly a hydrous silica material having a loss on ignition of at least 2 wt.%, more preferably of 4-45 wt.% and most preferably of 6-35 wt.%. Loss on Ignition is determined by strongly heating ("igniting") a sample of the porous silica material at 1000 °C, allowing volatile substances to escape, until its mass ceases to change. The volatile materials lost usually consist of "combined water" (hydrates and labile hydroxy-compounds) and carbon dioxide from carbonates.

In accordance with one embodiment of the invention the porous silica material employed in the present process is silica, preferably amorphous silica hydrogel. The term 'silica' as used herein refers to silica hydrogel. Silica hydrogel is commonly produced from the raw materials sulfuric acid and sodium silicate (water glass). The sodium silicate is dissolved in water, the sulfuric acid is diluted with water and both solutions are mixed at high shear in the presence of excess acid. This destabilises the polysilicic acids present in solution, causing them to be liberated in a colloidal form as a silica hydrosol. This hydrosol quickly becomes more robust so that it can be broken into small pieces that permit the sodium sulfate and excess sulfuric acid to be removed by washing with water. After washing, the hydrogel is milled, classified to a uniform particle size to ensure good filtration characteristics, and bagged. The final product typically contains some 67% volatiles (water) and has a surface area (BET) of around 800 $m^2/g$.

According to another embodiment the porous silica material is amorphous silicate, preferably amorphous silicate represented by the following formula:

$$xSiO_2.y^1MgO.y^2CaO.y^3 Al_2O_3$$

wherein:

$$0.1 \leq (y^1+y^2+y^3)/x \leq 0.5$$

Examples of amorphous silicate that can be employed in the present process include magnesium silicate, calcium silicate, aluminium silicate and combinations thereof. According to a particularly preferred embodiment, the silicate is synthetic magnesium silicate, especially a synthetic magnesium silicate containing, on an ignited bases, at least 10 wt.% MgO and at least 50 wt.% $SiO_2$.

According to yet another embodiment of the invention, the porous silica material is zeolite, preferably crystalline, micro porous, zeolite built from a three dimensional network of $[SiO_4]^{4-}$ and $[AlO_4]^{5-}$ tetrahedra-inked to each other by the sharing of oxygen atoms and having a structure formula based on the crystallographic unit cell of $M_{x/n} [(AlO_2)_x(SiO_2)_y] \cdot {}_wH_2O$, wherein M is an alkali or alkaline earth cation, n is the valence of the cation, w is the number of water molecules per unit cell, x and y are the total number of tetrahedra per unit cell, and the ratio y/x has a value of 1 to 100.

In accordance with another preferred embodiment, the porous silica material employed in the present process is a powder, more preferably a powder having a mass weighted average primary particle size in the range of 0.5-1000 $\mu$m, more preferably in the range of 1-500 $\mu$m, most preferably in the range of 5-300 $\mu$m.

The surface area of the porous silica material employed in the present process typically lies in the range of 10-5000 $m^2/g$. More preferably, the surface area of the silica lies in the range of 50-3000 $m^2/g$, even more preferably of 150-1500 $m^2/g$ and most preferably of 250-1000 $m^2/g$.

The porous silica material and the bleaching earth are preferably employed in bleaching step b) of the present process in a weight ratio that lies in the range of 2:1 to 1:20. More preferably, said weight ratio lies in the range of 1:1 to 1:15 and most preferably of 1:2 to 1:10.

The invention encompasses the use of neutral as well as acid-activated bleaching earth. According to a particularly preferred embodiment, the bleaching earth employed in the present process is a neutral bleaching earth. The inventors have found that neutral bleaching earth yields substantially lower 3-MCPD fatty acid ester levels in the refined palm fruit oil product than acid activated bleaching earth. Neutral bleaching earth typically has a pH in the range of 6 to 11, more preferably of 6.5 to 9 (pH being determined ASTM standard D6739 - 11 "Standard Test Method for Silica-pH Value")

The contacting of the pretreated palm fruit oil product with the bleaching earth in step b) of the present process, typically comprises adding bleaching earth to the pretreated palm fruit oil product in an amount of 0.1-10% by weight of the palm fruit oil product. More preferably, the bleaching earth is added in an amount of 0.2-5%, more preferably of 0.25-4% and most preferably of 0.3-3% by weight of the pretreated palm fruit oil product.

As explained herein before, in the present process the pretreated palm fruit oil product can be contacted with the bleaching earth and the porous silica material simultaneously or sequentially. Preferably, the pretreated oil is contacted with the silica material before or at the same time as it is contacted with the bleaching earth.

In accordance with a particularly preferred embodiment, the pretreated palm fruit oil product is simultaneously contacted with the porous silica material and the bleaching earth (simultaneous bleach treatment). In this embodiment, the pretreated palm fruit oil product is contacted with the silica material and bleaching earth under the same conditions (temperature, pressure). In the simultaneous bleach treatment the contact time with the bleaching earth and the silica material does not necessarily have to be the same as, for instance, the silica material may be added to the pretreated palm fruit oil product several minutes after the bleaching earth has been added. In the simultaneous bleach treatment the bleaching earth and silica material are preferably removed from the bleached palm fruit oil product simultaneously, e.g. by filtration and/or centrifugation.

Simultaneous bleach treatment of the pretreated oil in accordance with the present invention may comprise the combined addition of porous silica material and bleaching earth to the pretreated palm fruit oil product. Alternatively, the pretreated palm fruit oil product may be passed through a porous bed that contains the porous silica material and bleaching earth. The present process preferably does not comprise contacting of the pretreated palm fruit oil product with the bleaching earth by passing the pretreated palm fruit oil product through a filter cake comprising a layer of bleaching earth and a layer of silica (packed (fixed)-bed bleaching).

In case the pretreated palm fruit oil product is contacted with the porous silica material before or after it is contacted with the bleaching earth (sequential bleach treatment), the contacting with the bleaching earth may occur at a different temperature and/or pressure than the contacting with the silica material.

In the sequential bleach treatment, the pretreated palm fruit oil product is preferably contacted with the bleaching earth at a temperature of at least 80°C, more preferably of at least 90°C, even more preferably of at least 95°C and most preferably of at least 100°C. The temperature of the pretreated palm fruit oil product when it is contacted with the bleaching earth typically does not exceed 150°C. More preferably, said temperature does not exceed 140°C and most preferably it does not exceed 130°C.

In the sequential bleach treatment the pretreated palm oil is preferably contacted with the bleaching earth at a pressure of not more than 500 mbar, more preferably of not more than 200 mbar and most preferably of not more than 100 mbar.

In the sequential bleach treatment the pretreated palm fruit oil product is preferably contacted with the bleaching earth for at least 10 minutes, more preferably for 15-300 minutes, even more preferably for 18-180 minutes and most preferably for 20-100 minutes.

In accordance with a particularly preferred embodiment of the present process, the sequential bleach treatment comprises first contacting the pretreated palm fruit oil product with the porous silica material and subsequently with the bleaching earth. In accordance with this embodiment, the silica material is removed from the pretreated palm fruit oil product before the oil product is contacted with the bleaching earth.

Preferably, the bleached palm fruit oil product that is obtained from step b) of the present process is deodorised at a relatively low temperature of not more than 240°C, more preferably of not more than 235°C, even more preferably of not more than 230°C and most preferably of not more than 225 °C. In the present process the removal of volatile components from the bleached palm fruit oil product can suitably be achieved at temperatures lower than those conventionally used in deodorisation (≥220°C) as formation of glycidyl esters can be reduced by employing a lower temperature. Typically, this temperature is at least 150°C, more preferably at least 160°C, even more preferably at least 180°C and most preferably at least 200 °C.

The present process offers the advantage that it enables the production of refined palm fruit oil products having a very low content of 3-MCPD fatty acid esters using equipment that is conventionally employed in the refining of crude palm fruit oil products. The refined palm fruit oil product obtained by the present process typically contains less than 2 ppm 3-MCPD fatty acid ester, more preferably less than 1 ppm 3-MCPD fatty acid ester, even more preferably less than 0.7 ppm 3-MCPD fatty acid ester, most preferably less than 0.5 ppm 3-MCPD fatty acid ester.

Also 2-MCPD fatty acid ester levels and glycidyl fatty acid ester levels in the refined palm fruit oil product produced by the present process are typically very low. The refined palm fruit oil product usually contains less than 1 ppm 2-MCPD fatty acid ester, more preferably less than 0.5 ppm 2-MCPD fatty acid ester, even more preferably less than 0.4 ppm 2-MCPD fatty acid ester and most preferably less than 0.25 ppm 2-MCPD fatty acid ester.

The glycidyl fatty acid ester content of the refined palm fruit oil product typically is less than 3 ppm, more preferably less than 1.5 ppm. The concentrations of 3-MCPD fatty acid esters, 2-MCPD fatty acid esters and glycidyl esters can be determined (as free 3-MCPD, free 2-MCPD or free glycidol) using the methodology described in AOCS Official Method Cd 29a-13.

The present invention also relates to a refined palm fruit oil product obtained by a process as defined herein before. Typically, this refined palm fruit oil product has a free fatty acid content of less than 0.15 wt.%., more preferably of less than 0.1 wt.% and most preferably of less than 0.05 wt.%.

Yet another aspect of the present invention relates to an edible product containing 1-80 wt.% of a refined palm fruit oil product that is obtained by the process according to the present invention. The benefits of the present invention are particularly relevant for edible products in the form of fat blends, infant formula, infant food, spreads, kitchen margarines, bakery fats, dough fats, bakery margarines, cooking oils, frying fats, ice cream, powdered food products, animal feed and pet food.

The invention is further illustrated by means of the following non-limiting examples.

## EXAMPLES

Example 1

Crude palm oil was refined by successively neutralizing, drying, bleaching and deodorizing the same crude palm oil, using different bleaching conditions.

The neutralised, dry palm oil used as a starting material for the bleaching step had a POV of 3.4 meq $O_2$/kg, a free fatty acid content of 0.06% and a phosphorus content of less than 2 ppm. The bleached oils were deodorised at 220°C, at a pressure of less than 5 mbar for 150 minutes.

The different bleaching procedures employed in the experiments are summarised in Table 1 (percentages are % by weight of oil). In all cases bleaching was done at a pressure of 100 mbar. Experiments 1-A and 1-B are not according to the invention.

Table 1

| Experiment | Bleaching clay [1] | Silica [2] | Temperature | Time |
|---|---|---|---|---|
| 1-A | 1.1% | 0% | 95°C | 20 min. |
| 1-B | 1.1% | 0% | 120/95°C [3] | 20 min. |
| 1-1 | 1.1% | 1% | 120°C | 20 min. |
| 1-2 | 1.1% | 1% | 120°C | 180 min. |
| 1-3 | 1.1% | 1% | 120°C | 200 min. [4] |

[1] Pure-Flo® B-80 (Oil Dri Corp.)
[2] Trisyl® (Grace GmbH & Co.)
[3] Heat treatment (120°C, 180 min). followed by water washing, before bleaching
[4] Consecutive treatment with silica (20 min.) and bleaching clay (180 min.)

The levels of 3-MCPD fatty acid esters and 2-MCPD fatty acid esters in the refined oils so obtained were determined by the method described in AOCS Official Method Cd 29a-13. The results of these analyses are summarised in Table 2.

Table 2

| Experiment | 3-MCPD esters | 2-MCPD esters |
|---|---|---|
| 1-A | 2.5 ppm | 1.1 ppm |
| 1-B | 2.6 ppm | 1.2 ppm |
| 1-1 | 0.6 ppm | 0.3 ppm |
| 1-2 | 0.4 ppm | 0.2 ppm |
| 1-3 | 0.6 ppm | 0.3 ppm |

Example 2

Example 1 was repeated, using different bleaching procedures. This time, the neutralised, dry palm oil used as a starting material for the bleaching step had a POV of 4.5 meq $O_2$/kg, a free fatty acid content of less than 0.1% and a phosphorus content of less than 2 ppm.

The different bleaching procedures employed in the experiments are summarised in Table 3 (percentages are % by weight of oil). Experiments 2-A, 2-1 and 2-2 are not according to the invention.

Table 3

| Experiment | Bleaching clay | Silica [3] | Temperature | Time |
|---|---|---|---|---|
| 2-A | 1.1% [1] | 0% | 95°C | 20 min. |
| 2-1 | 1.1% [1] | 1% | 95°C | 20 min. |
| 2-2 | 1.1% [2] | 1% | 95°C | 180 min. |
| 2-3 | 1.1% [1] | 1% | 120°C | 180 min. |
| 2-4 | 1.1% [1] | 0.3% | 120°C | 180 min. |
| 2-5 | 1.1% [2] | 1% | 120°C | 180 min. |
| [1] Pure-Flo® B-80 (Oil Dri Corp.) [2] Tonsil® 510FF (Süd-Chemie AG) [3] Trisyl® (Grace GmbH & Co.) | | | | |

The levels of 3-MCPD fatty acid esters and 2-MCPD fatty acid esters in the refined oils so obtained were determined. The results of these analyses are summarised in Table 4.

Table 4

| Experiment | 3-MCPD esters | 2-MCPD esters |
|---|---|---|
| 2-A | 2.5 ppm | 1.0 ppm |
| 2-1 | 2.0 ppm | 1.0 ppm |
| 2-2 | 2.1 ppm | 0.9 ppm |
| 2-3 | 0.7 ppm | 0.2 ppm |
| 2-4 | 0.6 ppm | 0.2 ppm |
| 2-5 | 1.2 ppm | 0.5 ppm |

Example 3

Example 1 was repeated, using different bleaching procedures. This time, the neutralised, dry palm oil used as a starting material for the bleaching step had a POV of 7.9 meq $O_2$/kg, a free fatty acid content of 0.15% and a phosphorus content of less than 2 ppm.

The different bleaching procedures employed in the experiments are summarised in Table 5 (percentages are % by weight of oil).

Table 5

| Experiment | Bleaching clay [1] | Silica [2] | Temperature | Time |
|---|---|---|---|---|
| 3-1 | 0.3% | 1% | 120°C | 180 min. |
| 3-2 | 1.1% | 0.3% | 140°C | 100 min. |
| 3-3 | 1.1% | 1% | 140°C | 100 min. |
| 3-4 | 1.1% | 1% | 120°C | 100 min. |

(continued)

| Experiment | Bleaching clay [1] | Silica [2] | Temperature | Time |
|---|---|---|---|---|
| 3-5 | 2.2% | 0.3% | 120°C | 100 min. |

[1] Pure-Flo® B-80 (Oil Dri Corp.)
[2] Trisyl® (Grace GmbH & Co.)

The levels of 3-MCPD fatty acid esters and 2-MCPD fatty acid esters in the refined oils so obtained were determined. The results of these analyses are summarised in Table 6.

Table 6

| Experiment | 3-MCPD esters | 2-MCPD esters |
|---|---|---|
| 3-1 | 1.6 ppm | 0.6 ppm |
| 3-2 | 0.7 ppm | 0.4 ppm |
| 3-3 | 0.7 ppm | 0.4 ppm |
| 3-4 | 0.6 ppm | 0.3 ppm |
| 3-5 | 0.4 ppm | 0.2 ppm |

Example 4

Example 1 was repeated, using different bleaching procedures. This time, the neutralised, dry palm oil used as a starting material for the bleaching step had a POV of 8.3 meq $O_2$/kg, a free fatty acid content of 0.11% and a phosphorus content of less than 2 ppm.

The different bleaching procedures employed in the experiments are summarised in Table 7 (percentages are % by weight of oil).

Table 7

| Experiment | Bleaching clay [1] | Silica [2] | Silicate [3] | Temperature | Time |
|---|---|---|---|---|---|
| 4-1 | 2.2% | 0.3% |  | 120°C | 100 min. |
| 4-2 | 2.2% |  | 0.3% | 120°C | 100 min. |

[1] Pure-Flo® B-80 (Oil Dri Corp.)
[2] Trisyl® (Grace GmbH & Co.)
[3] Magnesol® R60 (The Dallas Group of America, Inc.)

The levels of 3-MCPD fatty acid esters and 2-MCPD fatty acid esters in the refined oils so obtained were determined. The results of these analyses are summarised in Table 8.

Table 8

| Experiment | 3-MCPD esters | 2-MCPD esters |
|---|---|---|
| 4-1 | 0.4 ppm | 0.2 ppm |
| 4-2 | 0.4 ppm | 0.2 ppm |

Example 5

Example 1 was repeated, using different degumming and bleaching procedures.

The different degumming and bleaching procedures employed in the experiments are summarised in Table 9 (percentages are % by weight of oil). Experiment 5-2 is not according to the invention.

Table 9

| Experiment | Degumming | Bleaching clay [1] | Silica [2] | Temperature | Time |
|---|---|---|---|---|---|
| 5-1 | Neutralisation | 1.1% | 1% | 120°C | 180 min. |
| 5-2 | Physical refining | 1.1% | 1% | 120°C | 180 min. |
| [1] Pure-Flo® B-80 (Oil Dri Corp.) [2] Trisyl® (Grace GmbH & Co.) | | | | | |

Degumming by neutralisation was carried out as follows. The crude palm oil was heated to approximately 100°C and brought into contact with low amount (0.05%) of concentrated citric and/or phosphoric acid in a dynamic mixer (to solubilise the phospholipids), followed by the addition of (9-11 N) caustic soda to neutralise the free fatty acids present in the crude oil. Soap and dissolved phospholipids were removed from the oil via the water phase in a centrifuge. After another water washing and centrifuge step, the oil was dried at about 100 mbar.

Degumming by physical refining was carried out as follows. The crude palm oil was heated to approximately 100 °C and brought into contact with low amounts of concentrated citric and/or phosphoric acid (to solubilise the phospholipids) and water in an agitated vessel for about 20 minutes. Vacuum was applied and the oil was dried.

The levels of 3-MCPD fatty acid esters 2-MCPD fatty acid esters and glycidyl fatty acid esters in the refined oils so obtained were determined. The results of these analyses are summarised in Table 10.

Table 10

| Experiment | 3-MCPD esters | 2-MCPD esters | Glycidyl esters |
|---|---|---|---|
| 5-1 | 0.4 ppm | 0.2 ppm | 0.9 ppm |
| 5-2 | 2.8 ppm | 1.4 ppm | 0.6 ppm |

Example 6

Example 1 was repeated, using different bleaching procedures. This time, the neutralised, dry palm oil used as a starting material for the bleaching step had a POV of 8.9 meq $O_2$/kg, a free fatty acid content of 0.19% and a phosphorus content of less than 2 ppm.

The different bleaching/deodorisation procedures employed in the experiments are summarised in Table 11 (percentages are % by weight of oil). Experiments 6-1 and 6-4 are not according to the invention.

Table 11

| Experiment | Bleaching clay [1] | Silicate [2] | Temperature | Time |
|---|---|---|---|---|
| 6-1 | 1.1% | 0% | 120°C | 100 min. |
| 6-2 | 1.1% | 1% | 120°C | 100 min. |
| 6-3 | 2.2% | 0.3% | 120°C | 100 min. |
| 6-4 | 1.1% | 1 % | 90°C | 100 min. |
| [1] Pure-Flo® B-80 (Oil Dri Corp.) [2] Magnesol® R60 (The Dallas Group of America, Inc.) | | | | |

The levels of 3-MCPD fatty acid esters 2-MCPD fatty acid esters and glycidyl fatty acid esters in the refined oils so obtained were determined. The results of these analyses are summarised in Table 12.

Table 12

| Experiment | 3-MCPD esters | 2-MCPD esters | Glycidyl esters |
|---|---|---|---|
| 6-1 | 0.9 ppm | 0.4 ppm | 1.0 ppm |
| 6-2 | 0.3 ppm | 0.2 ppm | 0.9 ppm |
| 6-3 | 0.4 ppm | 0.2 ppm | 1.0 ppm |

(continued)

| Experiment | 3-MCPD esters | 2-MCPD esters | Glycidyl esters |
|---|---|---|---|
| 6-4 | 0.9 ppm | 0.4 ppm | 1.0 ppm |

**Claims**

1. A process of refining a crude palm fruit oil product, said process comprising the successive steps of:

a) removing phospholipids and/or free fatty acids from a crude palm fruit oil product by subjecting the oil product to a pretreatment, thereby producing a pretreated palm fruit oil product with a reduced phospholipid content and/or a reduced free fatty acid content;
b) simultaneously or sequentially contacting the pretreated palm fruit oil product with bleaching earth and a porous silica material to produce a bleached palm fruit oil product, said porous silica material having a surface area of at least 10 $m^2$/g and being selected from the group consisting of silica, amorphous silicate, zeolite and combinations thereof; and
c) deodorizing the bleached palm fruit oil product to produce a refined palm fruit oil product;

wherein the pretreated palm fruit oil product is contacted with the porous silica material at a temperature of at least 100°C and wherein the pretreatment of the crude palm fruit oil product comprises the successive steps of:

• mixing the crude palm fruit oil product with an aqueous liquid having an alkaline pH of more than 8 to produce an oil-and-water mixture; and
• removing an aqueous liquid containing polar lipids from the oil-and-water mixture.

2. Process according to claim 1, wherein the pretreated palm fruit oil product is simultaneously contacted with the bleaching earth and the porous silica material.

3. Process according to claim 1, wherein the pretreated palm fruit oil product is first contacted with the porous silica material and subsequently with the bleaching earth.

4. Process according to any one of the preceding claims, wherein the bleached palm fruit oil product is deodorised at a temperature of not more than 240°C, preferably at a temperature of not more than 230°C.

5. Process according to any one of the preceding claims, wherein the pretreated palm oil fruit product is contacted with the porous silica material at a temperature of 105-200°C, even more preferably of 110-150°C.

6. Process according to any one of the preceding claims, wherein the pretreated palm fruit oil product is contacted with the porous silica material for at least 1 minute.

7. Process according to any one of the preceding claims, wherein the pretreated palm fruit oil product is contacted with the porous silica material at a pressure of not more than 500 mbar.

8. Process according to any one of the preceding claims, wherein the contacting of the pretreated palm fruit oil product with the porous silica material, comprises adding the porous silica material to the palm fruit oil product in an amount of 0.05-5% by weight of the palm fruit oil product.

9. Process according to any one of the preceding claims, wherein the porous silica material is amorphous silica, preferably amorphous silica hydrogel.

10. Process according to any one of claims 1-8, wherein the porous silica material is zeolite, preferably crystalline, micro porous, zeolite built from a three dimensional network of $[SiO_4]^{4-}$ and $[AlO_4]^{5-}$ tetrahedra-inked to each other by the sharing of oxygen atoms and having a structure formula based on the crystallographic unit cell of $M_{x/n} [(AlO_2)_x (SiO_2)_y]$ • $H_2O$, wherein M is an alkali or alkaline earth cation, n is the valence of the cation, w is the number of water molecules per unit cell, x and y are the total number of tetrahedra per unit cell, and the ratio y/x has a value of 1 to 100.

**11.** Process according to any one of claims 1-8, wherein the porous silica material is amorphous silicate, preferably amorphous silicate represented by the following formula:

$$xSiO_2.y^1MgO.y^2CaO.y^3 Al_2O_3$$

wherein: $0.1 \leq (y^1+y^2+y^3)/x \leq 0.5$.

**12.** Process according to any one of the preceding claims, wherein the porous silica material and the bleaching earth are employed in the bleaching step b) in a weight ratio that lies in the range of 2:1 to 1:20.

**13.** Process according to any one of the preceding claims, wherein the contacting of the pretreated palm fruit oil product with the bleaching earth, comprises adding bleaching earth to the palm fruit oil product in an amount of 0.1-10% by weight of the palm fruit oil product.

**14.** A refined palm fruit oil product obtained by a process according to any one of the preceding claims.

**15.** An edible product containing 1-80 wt.% of a refined palm fruit oil product according to claim 14.


**Patentansprüche**

**1.** Ein Verfahren zur Raffination eines rohen Palmfruchtölprodukts, wobei das Verfahren die folgenden aufeinanderfolgenden Schritte umfasst:

a) Entfernen von Phospholipiden und/oder freien Fettsäuren aus einem rohen Palmfruchtölprodukt, indem das Ölprodukt einer Vorbehandlung unterzogen wird, wodurch ein vorbehandeltes Palmfruchtölprodukt mit einem verringerten Phospholipidgehalt und/oder einem reduzierten Gehalt an freien Fettsäuren erzeugt wird;
b) gleichzeitiges oder sequentielles Inkontaktbringen des vorbehandelten Palmfruchtölprodukts mit Bleicherde und einem porösen Silica-Material, um ein gebleichtes Palmfruchtölprodukt zu erzeugen, wobei das besagte poröse Silica-Material eine Oberfläche von mindestens 10 m$^2$/g aufweist und ausgewählt ist aus der Gruppe bestehend aus Silica, amorphes Silicat, Zeolith und Kombinationen davon; und
c) Desodorieren des gebleichten Palmfruchtölprodukts, um ein raffiniertes Palmfruchtölprodukt zu erzeugen;

wobei das vorbehandelte Palmfruchtölprodukt mit dem porösen Silica-Material bei einer Temperatur von mindestens 100 °C in Kontakt gebracht wird und wobei die Vorbehandlung des rohen Palmfruchtölprodukts die folgenden aufeinanderfolgenden Schritte umfasst:

• Mischen des rohen Palmfruchtölprodukts mit einer wässrigen Flüssigkeit mit einem alkalischen pH-Wert von mehr als 8, um ein Öl-und-Wasser-Gemisch zu erzeugen; und
• Entfernen einer wässerigen Flüssigkeit, die polare Lipide enthält, aus dem Öl-und-Wasser-Gemisch.

**2.** Verfahren nach Anspruch 1, wobei das vorbehandelte Palmfruchtölprodukt gleichzeitig mit der Bleicherde und dem porösen Silica-Material in Kontakt gebracht wird.

**3.** Verfahren nach Anspruch 1, wobei das vorbehandelte Palmfruchtölprodukt zuerst mit dem porösen Silica-Material und anschließend mit der Bleicherde in Kontakt gebracht wird.

**4.** Verfahren nach einem der vorhergehenden Ansprüche, wobei das gebleichte Palmfruchtölprodukt bei einer Temperatur von nicht mehr als 240 °C, vorzugsweise bei einer Temperatur von nicht mehr als 230 °C desodoriert wird.

**5.** Verfahren nach einem der vorhergehenden Ansprüche, wobei das vorbehandelte Palmölfruchtprodukt mit dem porösen Silica-Material bei einer Temperatur von 105-200 °C, noch bevorzugter von 110-150 °C in Kontakt gebracht wird.

**6.** Verfahren nach einem der vorhergehenden Ansprüche, wobei das vorbehandelte Palmfruchtölprodukt mit dem porösen Silica-Material für mindestens 1 Minute in Kontakt gebracht wird.

**7.** Verfahren nach einem der vorhergehenden Ansprüche, wobei das vorbehandelte Palmfruchtölprodukt mit dem porösen Silica-Material bei einem Druck von nicht mehr als 500 mbar in Kontakt gebracht wird.

8. Verfahren nach einem der vorhergehenden Ansprüche, wobei das Inkontaktbringen des vorbehandelten Palmfruchtölprodukts mit dem porösen Silica-Material das Zugeben des porösen Silica-Materials zu dem Palmfruchtölprodukt in einer Menge von 0,05-5 Gew.-% des Palmfruchtölprodukts umfasst.

9. Verfahren nach einem der vorhergehenden Ansprüche, wobei das poröse Silica-Material amorphes Silica, vorzugsweise amorphes Silica-Hydrogel, ist.

10. Verfahren nach einem der Ansprüche 1 bis 8, wobei das poröse Silica-Material ein Zeolith ist, vorzugsweise ein kristalliner, mikroporöser, Zeolith, der aus einem dreidimensionalen Netzwerk von Tetraedern aus $[SiO_4]^{4-}$ und $[AlO_4]^{5-}$ aufgebaut ist, die durch die gemeinsame Nutzung von Sauerstoffatomen miteinander verbunden sind und eine Strukturformel aufweisen, die auf der kristallographischen Einheitszelle von $M_{x/n} [(AlO_2)_x (SiO_2)_y] \bullet {}_w H_2O$ beruht, wobei M ein Alkali- oder Erdalkalikation ist, n die Wertigkeit des Kations ist, w die Anzahl der Wassermoleküle pro Einheitszelle ist, x und y die Gesamtzahl der Tetraeder pro Einheitszelle sind und das Verhältnis y/x einen Wert von 1 bis 100 aufweist.

11. Verfahren nach einem der Ansprüche 1 bis 8, wobei das poröse Silica-Material ein amorphes Silicat ist, vorzugsweise ein amorphes Silicat, das durch die folgende Formel dargestellt wird:

$$xSiO_2 . y^1 MgO . y^2 CaO . y^3 Al_2O_3$$

worin: $0,1 \le (y^1 + y^2 + y^3)/x \le 0,5$.

12. Verfahren nach einem der vorhergehenden Ansprüche, wobei das poröse Silica-Material und die Bleicherde in dem Bleichschritt b) in einem Gewichtsverhältnis benutzt werden, das im Bereich von 2:1 bis 1:20 liegt.

13. Verfahren nach einem der vorhergehenden Ansprüche, bei dem das Inkontaktbringen des vorbehandelten Palmfruchtölprodukts mit der Bleicherde das Zugeben von Bleicherde zu dem Palmfruchtölprodukt in einer Menge von 0,1-10 Gew.-% des Palmfruchtölprodukts umfasst.

14. Ein raffiniertes Palmfruchtölprodukt, das nach einem Verfahren nach einem der vorhergehenden Ansprüche erhalten wird.

15. Ein essbares Produkt, enthaltend 1-80 Gew.-% eines raffinierten Palmfruchtölprodukts nach Anspruch 14.

**Revendications**

1. Un procédé de raffinage d'un produit d'huile brute de fruit de palmier, ledit procédé comprenant les étapes successives consistant à:

a) éliminer les phospholipides et/ou les acides gras libres de l'huile brute de fruit de palmier en soumettant l'huile brute à un prétraitement, produisant ainsi une huile de fruit de palmier prétraitée ayant une teneur réduite en phospholipides et/ou une teneur réduite en acides gras libres;
b) contacter simultanément ou séquentiellement l'huile de fruit de palmier prétraitée avec de la terre décolorante et une matière poreuse à base de silice pour produire une huile de fruit de palmier blanchie, ladite matière poreuse à base de silice ayant une surface superficielle d'au moins 10 $m^2$/g et étant choisie dans le groupe consistant en silice, silicate amorphe, zéolite et leurs combinaisons; et
c) désodoriser l'huile de fruit de palmier blanchie pour produire de l'huile de fruit de palmier raffinée;

procédé dans lequel l'huile de fruit de palmier prétraitée est mise en contact avec la matière poreuse à base de silice à une température d'au moins 100°C et dans lequel le prétraitement de l'huile de fruit de palmier brute comprend les étapes successives de:

• mélange de l'huile de fruit de palmier brute avec un liquide aqueux présentant un pH alcalin supérieur à 8, pour produire un mélange huile-eau, et
• élimination du liquide aqueux contenant des lipides polaires du mélange huile-eau.

**2.** Procédé selon la revendication 1, dans lequel l'huile de fruit de palmier prétraitée est simultanément mise en contact avec la terre de décoloration et la matière poreuse à base de silice.

**3.** Procédé selon la revendication 1, dans lequel l'huile de fruit de palmier prétraitée est tout d'abord mise en contact avec la matière poreuse à base de silice et ensuite avec la terre de décoloration.

**4.** Procédé selon l'une quelconque des revendications précédentes, dans lequel l'huile de fruit de palmier blanchie est désodorisée à une température non supérieure à 240° C, de préférence non supérieure à 230° C.

**5.** Procédé selon l'une quelconque des revendications précédentes, dans lequel l'huile de fruit de palmier prétraitée est mise en contact avec la matière poreuse à base de silice à une température de 105-200°C, encore plus préférablement de 110-150°C.

**6.** Procédé selon l'une quelconque des revendications précédentes, dans lequel l'huile de fruit de palmier prétraitée est mise en contact avec la matière poreuse à base de silice pendant au moins 1 minute.

**7.** Procédé selon l'une quelconque des revendications précédentes, dans lequel l'huile de fruit de palmier prétraitée est mise en contact avec la matière poreuse à base de silice à une pression ne dépassant pas 500 mbar.

**8.** Procédé selon l'une quelconque des revendications précédentes, dans lequel la mise en contact l'huile de fruit de palmier prétraitée avec la matière poreuse à base de silice comprend l'addition de la matière poreuse à base de silice à l'huile de fruit de palmier dans une proportion de 0,05-5% en poids par rapport à l'huile de fruit de palmier.

**9.** Procédé selon l'une quelconque des revendications précédentes, dans lequel la matière poreuse à base de silice est de la silice amorphe, de préférence de l'hydrogel de silice amorphe.

**10.** Procédé selon l'une quelconque des revendications 1 à 8, dans lequel la matière poreuse à base de silice est une zéolite, de préférence une zéolite microporeuse cristalline, construite à partir d'un réseau tridimensionnel de tétraèdres $[SiO_4]^{4-}$ et $[AlO_4]^{5-}$, liés les uns aux autres par le partage d'atomes d'oxygène et présentant une formule structurelle basée sur la cellule unitaire cristallographique de $M_{x/n}[(AlO_2)_x(SiO_2)_y]._wH_2O$, où M est un cation alcalin ou alcalino-terreux, n est la valence du cation, w est le nombre de molécules d'eau par unité de cellule, x et y correspondant au nombre total de tétraèdres par unité de cellule, et le rapport y/x présente une valeur de 1 à 100.

**11.** Procédé selon l'une quelconque des revendications 1 à 8, dans lequel la matière poreuse à base de silice est un silicate amorphe, de préférence un silicate amorphe représenté par la formule suivante:

$$xSiO_2.y^1MgO.y^2CaO.y^3Al_2O_3$$

dans laquelle: $0{,}1 \leq (y^1+y^2+y^3)/x \leq 0{,}5$.

**12.** Procédé selon l'une quelconque des revendications précédentes, dans lequel la matière poreuse à base de silice et la terre de décoloration sont utilisées dans l'étape de blanchiment b) dans un rapport pondéral compris entre 2/1 et 1/20.

**13.** Procédé selon l'une quelconque des revendications précédentes, dans lequel la mise en contact de l'huile de fruit de palmier prétraitée avec la terre décolorante comprend l'étape consistant à ajouter de la terre décolorante à l'huile de palmier dans une quantité de 0,1 à 10% en poids d'huile de fruit de palmier.

**14.** Huile de fruit de palmier raffinée obtenue par un procédé selon l'une quelconque des revendications précédentes.

**15.** Un produit comestible contenant 1-80% en poids d'une huile de fruit de palmier raffinée selon la revendication 14.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010063450 A
- WO 2011069028 A
- WO 2012107230 A
- WO 2013093093 A
- US 5336794 A
- WO 2010126136 A
- WO 2011002275 A
- WO 2012130745 A

**Non-patent literature cited in the description**

- **SIEW et al.** Silica Refining of Palm Oil. *JAOCS,* September 1994, vol. 71 (9
- **ROSSI et al.** The role of bleaching clays and synthetic silica in palm oil physical refining. *Food Chemistry,* 2003, vol. 82, 291-296
- **ZULKURNAIN et al.** The effects of physical refining on the formation of 3-monochloropropane-1,2-diol esters in relation to palm oil minor components. *Food Chemistry,* 2012, vol. 135, 799-805
- **ERMACORA et al.** Influence of oil composition on the formation of fatty acid esters of 2-chloropropane-1,3-diol (2-MCPD) and 3-chloropropane-1,2-diol (3-MCPD) under conditions simulating oil refining. *Food Chemistry,* 2014, vol. 161, 383-389